(19) **Europäisches Patentamt European Patent Office Office européen des brevets**

(11) **EP 4 317 034 B1**

(12) **EUROPEAN PATENT SPECIFICATION**

(45) Date of publication and mention of the grant of the patent:
**28.01.2026 Bulletin 2026/05**

(21) Application number: **22898887.9**

(22) Date of filing: **02.11.2022**

(51) International Patent Classification (IPC):
**B65G 43/08** (2006.01)      **B60L 1/00** (2006.01)
**B60L 58/14** (2019.01)      **G06Q 10/0832** (2023.01)
**G06Q 10/0833** (2023.01)    **H01M 4/00** (2006.01)

(52) Cooperative Patent Classification (CPC):
**G06Q 10/0833; B60L 1/00; B60L 58/14;**
**G06Q 10/0832;** B60L 2240/12; B60L 2240/14;
B60L 2240/662; Y02E 60/10

(86) International application number:
**PCT/KR2022/017048**

(87) International publication number:
**WO 2023/096205 (01.06.2023 Gazette 2023/22)**

(54) **BATTERY MOVEMENT DETECTION DEVICE AND BATTERY MONITORING SYSTEM COMPRISING SAME**

VORRICHTUNG ZUR ERKENNUNG VON BATTERIEBEWEGUNGEN UND BATTERIEÜBERWACHUNGSSYSTEM DAMIT

DISPOSITIF DE DÉTECTION DE MOUVEMENT DE BATTERIE ET SYSTÈME DE SURVEILLANCE DE BATTERIE LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.11.2021 KR 20210163806**

(43) Date of publication of application:
**07.02.2024 Bulletin 2024/06**

(73) Proprietor: **LG Energy Solution, Ltd.**
**Seoul 07335 (KR)**

(72) Inventors:
• **LEE, Hu Jun**
  **Daejeon 34122 (KR)**
• **LEE, Sang Hoon**
  **Daejeon 34122 (KR)**
• **CHUNG, Moon Koo**
  **Daejeon 34122 (KR)**
• **LEE, Jung Hoon**
  **Daejeon 34122 (KR)**
• **KWON, Jung Hyun**
  **Daejeon 34122 (KR)**
• **KIM, Duk You**
  **Daejeon 34122 (KR)**
• **HAM, Seok Hyeong**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A1- 3 249 736          WO-A1-2020/060810
JP-A- 2019 097 125        JP-A- 2019 097 125
JP-A- 2019 149 904        JP-A- 2019 152 563
JP-A- H07 198 807         KR-A- 20130 054 766
KR-A- 20190 006 824       US-A1- 2011 133 888
US-A1- 2017 278 061

# Description

## [TECHNICAL FIELD]

CROSS-REFERENCE TO RELATED APPLICATION

This application claims priority to and the benefit of Korean Patent Application No. 10-2021-0163806 filed in the Korean Intellectual Property Office on November 24, 2021.

TECHNICAL FIELD

Embodiments disclosed herein relate to a battery movement detection apparatus and a battery monitoring system including the same.

## [BACKGROUND ART]

Recently, as the demand for portable electronic products such as laptop computers, video cameras, and mobile phones has increased rapidly, and development of electric vehicles, batteries for energy storage, robots, satellites, etc., has hit its stride, research on high-performance batteries that are repeatedly chargeable and dischargeable is being actively conducted.

Current commercially available batteries include nickel cadmium batteries, nickel hydride batteries, nickel zinc batteries, lithium batteries, and so forth, among which the lithium batteries are in the limelight due to their advantages of free charge and discharge due to little memory effect, very low self-discharge rate, and high energy density, compared to nickel-based batteries.

In a process of producing such a battery, the battery is moved through a logistics moving device such as a conveyor belt, etc.
US 2017/0278061 A1 describes services making use of location information, and more specifically to motion-based tracking of package placement in a logistics container comprising an associated container node. The container node detects a signal broadcast from an ID node associated with a package to be shipped within the logistics container and then senses an impact force on the logistics container using a motion sensor on the container node. The detected signal and the sensed impact force indicate the package was placed within the logistics container, whereupon a managing node is notified accordingly. JP 2019-097125 A relates to reducing energy consumption in wireless communication networks and describes measuring an amount of charge consumed per day based on communication parameters such as data rate and signal strength, estimating remaining battery life based on the measured amount of charge, and adapting the communication parameters dynamically to optimize battery life. JP 407198807 A relates to energy storage using batteries and describes computing the residual amount of a battery by taking its temperature into consideration.

It is therefore the object of the present invention to provide an improved battery movement detection apparatus and a corresponding operating method thereof.

This object is solved by the subject-matter of the independent claims.

Preferred embodiments are defined in the dependent claims.

During the logistics movement of the battery, when impact occurs on a tray accommodating the battery or congestion section of the logistics movement occurs, the battery may be damaged, resulting in degradation of performance and quality of the battery product. Thus, in a battery production process, it is important to detect in real time whether impact has been applied to the battery or whether there is congestion in the battery logistics movement by detecting the logistics movement of the battery. At this time, when the impact is detected on the battery or there is the congestion in the logistics movement of the battery, it is necessary to track a location of the battery in real time as well.

A battery movement detection apparatus according to an embodiment disclosed herein includes a speed sensor configured to obtain speed information of a tray accommodating a battery, a power supply unit configured to provide a driving power, an environment sensor configured to obtain a surrounding temperature and/or surrounding humidity of the power supply unit, a communication unit configured to transmit the speed information to a battery position detection apparatus, and a controller configured to calculate a difference between a preset reference temperature of the power supply unit and the surrounding temperature and/or calculate a difference between a preset reference humidity of the power supply unit and the surrounding humidity, calculate an available limit of the power supply unit based on the difference between the preset reference temperature and the surrounding temperature and/or between the preset reference humidity and the surrounding humidity, the available limit being a factor for determining whether the power supply unit is drivable, and control an operation of the communication unit based on the available limit of the power supply unit.

According to an embodiment, the controller may be further configured to adjust the communication period based on the available limit of the power supply unit.

According to an embodiment, the speed sensor may include at least one of an acceleration sensor and an angular speed sensor.

According to an embodiment, calculating the available limit of the power supply unit is further based on a capacity of the power supply unit, a consumed current required for the communication unit to transmit the speed information to a battery position detection apparatus, and a communication time of the communication unit.

According to an embodiment, the controller may be further configured to increase the communication period when the available limit of the power supply unit is less than a reference value.

In a battery monitoring system including a battery movement detection apparatus according to the aforementioned embodiments, a battery position detection apparatus, and a server, according to an embodiment disclosed herein, the battery position detection apparatus includes a distance measurement unit configured to obtain distance information with the battery movement detection apparatus and a second communication unit configured to transmit the speed information and the distance information to the server, and the server is further configured to calculate an amount of impact applied to the battery movement detection apparatus based on the speed information and track a position of the battery movement detection apparatus based on the distance information.

According to an embodiment, the controller of the battery movement detection apparatus may be further configured to increase the first communication period when the available limit of the first power supply unit is less than a first reference value.

According to an embodiment, the server may be further configured to generate a first alert message when the available limit of the first power supply unit is equal to or greater than the first reference value and is less than a second reference value.

According to an embodiment, calculating the available limit of the power supply unit if further based on a capacity of the power supply unit, a consumed current required for the communication unit to transmit the speed information to the battery position detection apparatus, and a communication time of the communication unit.

According to an embodiment, the battery position detection apparatus may include a second power supply unit configured to provide a driving power, a second environment sensor configured to obtain environment information about a surrounding environment, and a second controller configured to calculate an available limit of the second power supply unit based on the environment information and control an operation of the second communication unit based on the available limit of the second power supply unit.

According to an embodiment, the environment information may include at least one of temperature information and humidity information.

According to an embodiment, the second controller may be further configured to calculate a diagnosis coefficient based on the environment information and calculate the available limit of the second power supply unit based on the diagnosis coefficient, a capacity of the second power supply unit, a consumed current required for the second communication unit to transmit the speed information and the distance information to the server, and a communication time of the second communication unit.

According to an embodiment, the second controller may be further configured to increase the second communication period when the available limit of the second power supply unit is less than a third reference value.

According to an embodiment, the server may be further configured to generate a second alert message when the available limit of the second power supply unit is equal to or greater than the third reference value and is less than a fourth reference value.

An operating method of a battery movement detection apparatus according to an embodiment disclosed herein includes obtaining speed information of a tray accommodating a battery, obtaining a surrounding temperature and/or surrounding humidity of the power supply unit, transmitting the speed information to another device in every preset communication period, calculating a difference between a preset reference temperature of the power supply unit and the surrounding temperature and/or calculating a difference between a preset reference humidity of the power supply unit and the surrounding humidity, calculating an available limit of a power supply unit based on the difference between the preset reference temperature and the surrounding temperature and/or between the preset reference humidity and the surrounding humidity, the available limit being a factor for determining whether the power supply unit is drivable, and adjusting the communication period based on the available limit of the power supply unit.

According to an embodiment, the operation method may further include measuring a consumed current and a communication time required for transmitting the speed information to the other device, in which the available limit of the power supply unit is calculated based on the capacity of the power supply unit, the consumed current, and the communication time.

According to an embodiment, the operation method may further include increasing the communication period when the available limit of the power supply unit is less than a reference value.

According to an embodiment, the speed information may include acceleration information or angular speed information.

[ADVANTAGEOUS EFFECTS]

A battery movement detection apparatus according to the disclosure of the present document may detect whether impact occurs due to the logistics movement of a battery and whether congestion occurs in the logistics movement of the battery.

A battery movement detection apparatus and/or a battery position detection apparatus according to the disclosure of the present document may calculate the available capacity of a power supply unit providing driving power to diversify an operation based on the calculated available capacity, thereby preventing an operation from being stopped due to a shortage of voltage supply and managing the same.

A battery monitoring system according to the disclosure of the present document may monitor the amount of impact applied to the battery and/or the position of the battery when the impact occurs according to the logistics movement of the battery or congestion occurs in the logistics movement of the battery.

The effects of the battery movement detection apparatus and the battery monitoring system according to the disclosure of the present document are not limited to the effects mentioned above, and other effects not mentioned will be clearly understood by those of ordinary skill in the art according to the disclosure of the present document.

[DESCRIPTION OF DRAWINGS]

FIG. 1 shows a tray and a battery movement detection apparatus according to an embodiment disclosed herein;
FIG. 2 shows a monitoring system according to an embodiment disclosed herein.
FIG. 3 shows a battery position detection apparatus according to an embodiment disclosed herein.
FIG. 4 is a flowchart illustrating an operating method of a battery monitoring system according to an embodiment disclosed herein.
FIG. 5 is a flowchart illustrating in detail an operating method of a battery monitoring system according to an embodiment disclosed herein.
FIG. 6 is a flowchart illustrating in detail an operating method of a battery monitoring system according to an embodiment disclosed herein.

With regard to the description of the drawings, similar reference numerals may be used to refer to similar or related components.

[MODE FOR INVENTION]

Hereinafter, various embodiments of the present disclosure will be disclosed with reference to the accompanying drawings. However, the description is not intended to limit the present disclosure to particular embodiments, and it should be construed as including various modifications, equivalents, and/or alternatives according to the embodiments of the present disclosure.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st", "2nd," "first", "second", "A", "B", "(a)", or "(b)" may be used to simply distinguish a corresponding component from another, and does not limit the components in other aspect (e.g., importance or order), unless mentioned otherwise.

Herein, it is to be understood that when an element (e.g., a first element) is referred to, with or without the term "operatively" or "communicatively", as "connected with", "coupled with", or "linked with", or "coupled to" or "connected to" to another element (e.g., a second element), it means that the element may be connected with the other element directly (e.g., wiredly), wirelessly, or via a third element.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

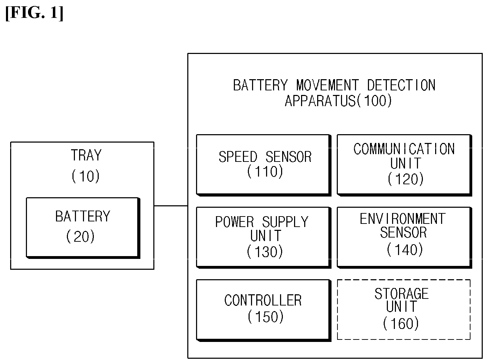

FIG. 1 shows a tray and a battery movement detection apparatus according to an embodiment disclosed herein.

Referring to FIG. 1, a tray 10 may accommodate a battery 20. The battery movement detection apparatus 100 may be connected to the tray 10. The battery movement detection apparatus 100 may detect movement of the tray 10. Thus, the battery movement detection apparatus 100 may detect movement of the battery 20 accommodated in the tray 10.

The battery movement detection apparatus 100 according to an embodiment disclosed herein may include a speed sensor 110, a communication unit 120, a power supply unit 130, an environment sensor 140, and a controller 150. The battery movement detection apparatus 100 may further include a storage unit 160.

The speed sensor 110 may obtain information for detecting impact of the battery movement detection apparatus 100. According to an embodiment, the speed sensor 110 may obtain speed information of the tray 10. The speed sensor 110 may include an acceleration sensor and/or an angular speed sensor. According to an embodiment, the angular speed sensor may include a gyro sensor.

The communication unit 120 may communicate with another electronic device. According to an embodiment, the communication unit 120 may perform ultra-wideband (UWB) wireless communication. The communication unit 120 may communicate with another electronic device in every preset communication period. The communication unit 120 may transmit the speed information obtained by the speed sensor 110 to another device or server other than the battery movement detection apparatus 100.

According to an embodiment, the communication unit 120 may operate in a wake-up mode corresponding to a communication period. The communication unit 120 may operate in a sleep mode after communication with another electronic device in a communication period. When the communication unit 120 operates in the sleep mode, the battery movement detection apparatus 100 may reduce power consumption. According to an embodiment, the communication unit 120 may be controlled in an operation thereof by the controller 150. For example, the communication period of the communication unit 120 may be controlled by the controller 150.

The power supply unit 130 may provide a driving power to the battery movement detection apparatus 100. According to an embodiment, the power supply unit 130 may provide a driving power to the speed sensor 110, the communication unit 120, the environment sensor 140, the controller 150, and/or the storage unit 160. According to an embodiment, the capacity of the power supply unit 130 may be limited. The power supply unit 130 may be a power storage unit that is not connected to a power source at all times and has a predetermined capacity.

The environment sensor 140 measures surrounding environment information of the battery movement detection apparatus 100. The environment information measured by the environment sensor 140 includes temperature information and/or humidity information. For example, the environment sensor 140 may measure the environment information of the power supply unit 130. That is, the environment sensor 140 may measure a temperature and/or humidity around the power supply unit 130.

The controller 150 may control an operation of the communication unit 120. The controller 150 may be communicatively connected to the communication unit 120.

The controller 150 may receive the environment information from the environment sensor 140. The controller 150 may control an operation of the communication unit 120 considering the environment information received from the environment sensor 140. The controller 150 may calculate an available limit of the power supply unit 130 based on the environment information and control an operation of the communication unit 120 based on the calculated available limit. According to an embodiment, the controller 150 may adjust a communication period of the communication unit 120 based on the available limit.

More specifically, the controller 150 may calculate a diagnosis coefficient related to the power supply unit 130 based on the environment information. The controller 150 may calculate the available limit of the power supply unit 130 based on the diagnosis coefficient. Herein, the diagnosis coefficient may be calculated based on the surrounding environment information of the power supply unit 130, and may be understood as a factor related to performance degradation of the power supply unit 130 due to surrounding environment information.

More specifically, the controller 150 may calculate a diagnosis coefficient based on a temperature difference between a preset reference temperature related to the power supply unit 130 and a surrounding temperature of the power supply unit and/or a humidity difference between a preset reference humidity related to the power supply unit 130 and a surrounding humidity of the power supply unit 130. Herein, the reference temperature may be an optimal temperature preset to allow the power supply unit 130 to show optimal performance. Herein, the reference humidity may be an optimal humidity preset to allow the power supply unit 130 to show optimal performance. According to an embodiment, the reference temperature may be set to a room temperature of 25 °C, and the reference humidity may be set to 0 %, without being limited thereto. The performance of the power supply unit 130 may degrade as the temperature difference between the reference temperature and the surrounding temperature of the power supply unit 130 and/or the humidity difference between the reference humidity and the surrounding humidity of the power supply unit 130 may be large. That is, as the temperature difference and/or humidity difference increases, the amount of power of the power supply unit 130 consumed by the communication unit 120 when the communication unit 120 transmits speed information to another electronic device may increase.

The controller 150 may distinguish a high-temperature section and a low-temperature section based on the reference temperature. The controller 150 may calculate the diagnosis coefficient separately for a case where the temperature of the power supply unit 130 belongs to the low-temperature section and a case where the temperature thereof belongs to the high-temperature section. According to an embodiment, the controller 150 may calculate the diagnostic coefficient such that the diagnostic coefficient is greater when the surrounding temperature of the power supply unit 130 belongs to the low-temperature range than when the surrounding temperature of the power supply unit 130 belongs to the high-temperature range.

In general, the performance of the power supply unit 130 may decrease more at low temperatures than at high temperatures. For example, a performance drop when the temperature of the power supply unit 130 decreases from 25 °C to 0 °C may be greater than a performance drop when the temperature of the power supply unit 130 increases from 25 °C to 50 °C. Moreover, when the temperature of the power supply unit 130 is below zero, the performance drop of the power supply unit 130 may further increase. Accordingly, even when a temperature difference than the reference temperature is the same for the case where the surrounding temperature of the power supply unit 130 belongs to the low-temperature section and the case where the surrounding temperature of the power supply unit 130 belongs to the high-temperature section, the controller 150 may calculate the diagnosis coefficient such that the diagnosis coefficient is greater when the surrounding temperature belongs to the low-temperature section than when the surrounding temperature belongs to the high-temperature section.

The controller 150 may calculate the available limit of the power supply unit 130 based on the diagnosis coefficient, the capacity of the power supply unit 130, a consumed current required for the communication unit 120 to transmit the speed information to another electronic device, and the communication time of the communication unit 120.

Herein, the capacity of the power supply unit 130 may be a maximum capacity of the power supply unit 130. According to an embodiment, the capacity of the power supply unit 130 may be a maximum capacity when the power supply unit 130 is in a beginning-of-life (BoL) state. In addition, the consumed current may mean the consumed current required for the communication unit 120 to transmit the speed information to the other electronic device. In addition, the communication time may mean a time required for the communication unit 120 to transmit the speed information to the other electronic device.

Herein, the available limit may be a factor for determining whether the power supply unit 130 is drivable. According to an embodiment, the available limit of the power supply unit 130 may be expressed as an available time. According to an embodiment, the available limit of the power supply unit 130 expressed in the unit of a time may be expressed as the remaining capacity of the power supply unit 130, the number of possible communication of the power supply unit 130, etc., through unit conversion.

For example, the available limit may be configured to decrease as the calculated diagnosis coefficient increases. That is, the available limit of the power supply unit 130 may decrease as the diagnosis coefficient increases.

The controller 150 may calculate the available limit of the power supply unit 130 with reference to Equation 1 below.

[Equation 1]

$$D = \frac{C}{I} - \sum (K \times T)$$

In Equation 1, D indicates an available limit, C indicates a maximum capacity of the power supply unit 130, I indicates a consumed current, K indicates a diagnosis coefficient, and T indicates a communication time. According to an embodiment, the unit of C may be [mAh], the unit of I may be [mA], K may be a constant value, and the unit of T may be [s] or [h]. The controller 150 may multiply a proper coefficient for unit conversion to the entire Equation 1 or a part thereof to calculate the available limit D in the unit of a second [s] or an hour [h].

The available limit D calculated using Equation 1 may mean the available time of the power supply unit 130 with respect to the current capacity of the power supply unit 130. The available time of the power supply unit 130 may decrease as the power supply unit 130 operates, i.e., provides a driving power to the communication unit 120. That is, in Equation 1, as a product of the diagnosis coefficient K and the communication time T is accumulated and subtracted for the available limit D, Equation 1 may mean that the available limit D decreases as the power supply unit 130 operates.

Referring to Equation 1, the available limit D may further decrease as the diagnosis coefficient K increases. That is, a drop of the available limit D may increase as the diagnosis coefficient K is calculated large based on the surrounding environment information of the power supply unit 130.

The controller 150 may calculate an available limit of the power supply unit 130 with reference to Equation 1 and control an operation of the communication unit 120 based on the calculated available limit. The controller 150 may determine whether the power supply unit 130 is drivable to control an operation of the communication unit 120. More specifically, the controller 150 may compare the calculated available limit with a reference value and control an operation of the communication unit 120 based on a comparison result.

According to an embodiment, the controller 150 may determine that the power supply unit 130 is drivable when the available limit of the power supply unit 130 is equal to or greater than the reference value. In this case, the controller 150 may maintain the communication period of the communication unit 120.

According to another embodiment, the controller 150 may increase the communication period of the communication unit 120 when the available limit of the power supply unit 130 is less than the reference value. When the available limit of the power supply unit 130 is less than the reference value, this may correspond to a case where the power supply unit 130 may not normally provide a driving power. That is, when the available limit of the power supply unit 130 is less than the reference value, the communication unit 120 may not be communicable with another electronic device according to a preset communication period. Thus, when the available limit of the power supply unit 130 is less than the reference value, the controller 150 may increase the communication period of the communication unit 120 to reduce the frequency of communication of the communication unit 120.

According to an embodiment, when the available limit of the power supply unit 130 is insufficient for providing a sufficient power for an operation of the communication unit 120, the communication unit 120 may not be communicable with another electronic device even when operating in the wakeup mode. According to an embodiment, the controller 150 may calculate the available limit of the power supply unit 130 before the communication unit 120 operates in the wakeup mode.

The controller 150 may control an operation of the communication unit 120. The communication unit 120 may transmit the available limit to the other electronic device. According to an embodiment, the communication unit 120 may transmit the available limit to the other electronic device only when the available limit is equal to or greater than the reference value. According to another embodiment, the communication unit 120 may transmit the available limit to the other electronic device only when the available limit is less than the reference value.

The battery movement detection apparatus 100 according to an embodiment disclosed herein may more accurately determine whether the power supply unit 130 is drivable, by considering not only the consumed current and the communication time required in a communication process and the available capacity of the power supply unit 130 capable of providing a driving power to the communication unit 120, but also surrounding environment information of the power supply unit 130, in calculating the available limit of the power supply unit 130.

The power supply unit 130 of the battery movement detection apparatus 100 according to an embodiment disclosed herein may correspond to a power storage unit having a predetermined capacity and may have performance deviation depending on a surrounding temperature and/or humidity in driving. Thus, the controller 150 may calculate the available limit of the power supply unit 130 and determine whether the power supply unit 130 is drivable, considering the surrounding environment information of the power supply unit 130, thereby preventing an operation of the communication unit 120 from being stopped and/or the power supply unit 130 from being over-discharged over a limit value.

The controller 150 may selectively include a processor, an application-specific integrated circuit (ASIC), other chipsets, a logic circuit, a register, a communication modem, a data processing device, etc., known in this field to execute various control logics performed herein. Thus, when the control logic is implemented as software, the controller 150 may be implemented as a group of program modules. In this case, the program module may be stored in a memory and may be executed by the controller 150. The memory may be inside or outside the controller 150 and may be connected to the controller 150 by well-known various means.

The storage unit 160 may store data or a program required for each component of the battery movement detection apparatus 100 to perform an operation and a function of each component or data, etc., generated in a process of performing the operation and the function. The storage unit 160 may not be specially limited to a specific type as long as it is a well-known information storage means known to record, erase, update, and read data. According to an embodiment, the information storage means may include random access memory (RAM), flash memory, read only memory (ROM), electrically erasable and programmable read only memory (EEPROM), register, etc. In addition, the storage unit 160 may store program codes where processes executable by the controller 150 are defined.

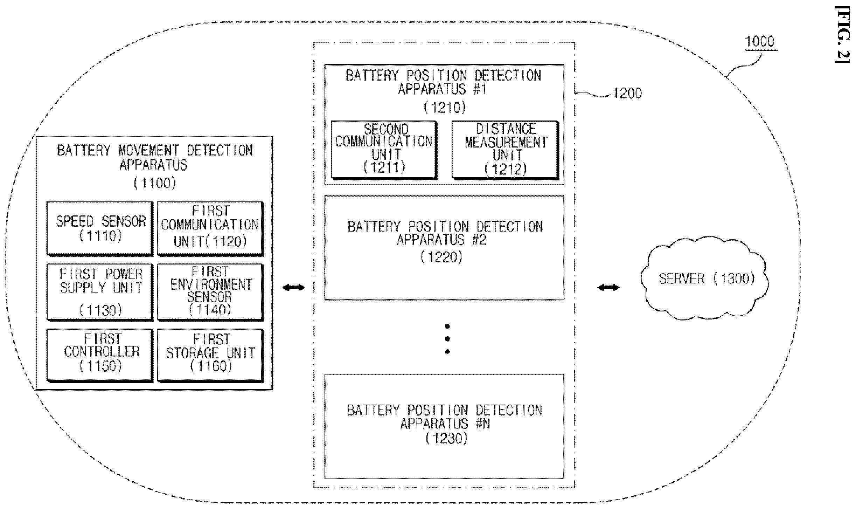

FIG. 2 shows a monitoring system according to an embodiment disclosed herein.

Referring to FIG. 2, a battery monitoring system 1000 according to an embodiment disclosed herein may include a battery movement detection apparatus 1100, a battery position detection apparatus 1200, and a server 1300.

Hereinbelow, the battery monitoring system 1000 will be described in detail with reference to FIG. 1.

The battery movement detection apparatus 1100 may be substantially the same as the battery movement detection apparatus 100 of FIG. 1.

A speed sensor 1110 may have substantially the same configuration as the speed sensor 110 of FIG. 1. The speed sensor 1110 may measure speed information of the battery movement detection apparatus 1100. The speed sensor 1110 may include an acceleration sensor and/or an angular speed sensor. In this case, the angular speed sensor may correspond to a gyro sensor.

A first communication unit 1120 may have substantially the same configuration as the communication unit 120 of FIG. 1. The first communication unit 1120 may communicate with another electronic device. According to an embodiment, the first communication unit 1120 may perform UWB wireless communication. The first communication unit 1120 may transmit speed information to another electronic device in every preset first communication period. The first communication unit 1120 may transmit the speed information obtained by the speed sensor 1110 to another device or server other than the battery movement detection apparatus 1100.

A first power supply unit 1130 may have substantially the same configuration as the power supply unit 130 of FIG. 1. The first power supply unit 1130 may provide a driving power to the battery movement detection apparatus 1100. According to an embodiment, the first power supply unit 1130 may provide a driving power to the speed sensor 1110, the first communication unit 1120, the first power supply unit 1130, a first environment sensor 1140, a first controller 1150, and/or a first storage unit 1160.

The first environment sensor 1140 may have substantially the same configuration as the environment sensor 140 of FIG. 1. The first environment sensor 1140 may measure surrounding environment information of the battery movement detection apparatus 1100. According to an embodiment, the first environment sensor 1140 may measure the surrounding environment information of the first power supply unit 1130.

The first controller 1150 may have substantially the same configuration as the controller 150 of FIG. 1. The first controller 1150 may control an operation of the first communication unit 1120. The first controller 1150 may calculate the available limit of the first power supply unit 1130 based on first environment information.

The first controller 1150 may control an operation of the first communication unit 1120 based on the available limit of the first power source unit 1130. The first controller 1150 may determine whether the available limit of the first power source unit 1130 is less than a first reference value. The first controller 1150 may increase the first communication period when the available limit of the first power source unit 1130 is less than the first reference value.

The first controller 1150 may control an operation of the first communication unit 1120 that may transmit the available limit of the first power source unit 1130 to another electronic device. According to an embodiment, the first communication unit 1120 may transmit the available limit to the other electronic device only when the available limit is equal to or greater than the first reference value. According to another embodiment, the first communication unit 1120 may transmit the available limit of the first power source unit 1130 to the other electronic device only when the available limit of the first power source unit 1130 is less than the first reference value.

The first storage unit 1160 may have substantially the same configuration as the first storage unit 160 of FIG. 1.

The battery position detection apparatus 1200 may include a plurality of battery position detection apparatuses 1210, 1220, and 1230. According to an embodiment, the battery position detection apparatus 1200 may include three or more battery position detection apparatuses. The battery position detection apparatus 1200 may have the same configuration. According to an embodiment, the battery position detection apparatus #1 1210 may include a second communication unit 1211 and a distance measurement unit 1212. A detailed description of the battery position detection apparatus #2 1220 and the battery position detection apparatus #N 1230 may refer to a description of the battery position detection apparatus #1 1210.

The second communication unit 1211 may communicate with another electronic device. According to an embodiment, the second communication unit 120 may perform UWB wireless communication. The second communication unit 1211 may communicate with another electronic device in every preset second communication period.

According to an embodiment, the second communication unit 1211 may operate in the wake-up mode corresponding to the second communication period. The second communication unit 1211 may operate in the sleep mode after communication with the other electronic device in the second communication period. When the second communication unit 1211 operates in the sleep mode, power consumption of the battery position detection apparatus #1 1210 may be reduced. Herein, the other electronic device may mean a device other than the battery position detection apparatus #1 1210 or a server. More specifically, the other electronic device may mean the battery movement detection apparatus 1100, the battery position detection apparatus #2 1220, the battery position detection apparatus #3 1230, and/or the server 1300. The second communication unit 1211 may receive speed information from the first communication unit 1120. The second communication unit 1211 may transmit the speed information to the server 1300.

The distance measurement unit 1212 may obtain distance information between the battery position detection apparatus #1 1210 and the battery movement detection apparatus 1100. The distance measurement unit 1212 may measure a time required for the second communication unit 1211 to transmit a signal to the battery movement detection apparatus 1100 and for the signal to return. The distance measurement unit 1212 may calculate the distance information between the battery position detection apparatus #1 1210 and the battery movement detection apparatus 1100 by using the measured time. The second communication unit 1211 may transmit the distance information to the server 1300. That is, the second communication unit 1211 may the distance information received from the battery movement detection apparatus 1100 and the distance information between the battery position detection apparatus #1 1210 and the battery movement detection apparatus 1100, obtained from the distance measurement unit 1212, together.

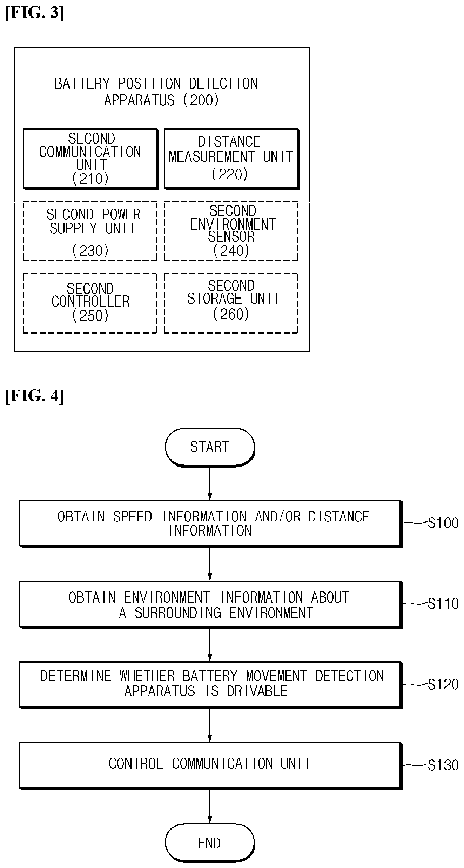

A detailed description of the battery position detection apparatus 1200 will be provided later with reference to FIG. 3.

The server 1300 may calculate the amount of impact applied to the battery movement detection apparatus 1100 or track the position of the battery movement detection apparatus 1100. According to an embodiment, the server 1300 may receive the speed information of the battery movement detection apparatus 1100 from the battery movement detection apparatus 1100. According to an embodiment, the server 1300 may receive the speed information and/or the distance information between the battery movement detection apparatus 1100 and the battery position detection apparatus 1200 from the battery position detection apparatus 1200.

The server 1300 may calculate the amount of impact applied to the battery movement detection apparatus 1100 based on the speed information. The speed information may mean acceleration information and/or angular speed information measured by the speed sensor 1110.

The server 1300 may track the position of the battery movement detection apparatus 1100 based on the distance information. The server 1300 may receive distance information from each of the plurality of battery position detection apparatuses 1200. According to an embodiment, the server 1300 may receive measured distance information from each of three or more battery position detection apparatuses. The server 1300 may track the position of the battery movement detection apparatus 1100 based on the received plural distance information. According to an embodiment, the server 1300 may identify the position of the battery movement detection apparatus 1100 based on the received plural distance information through triangulation. According to an embodiment, the server 1300 may track the position of the battery movement detection apparatus 1100 by using a time of arrival (TOA), a time difference of arrival (TDOA), an angle of arrival (AOA), etc.

The server 1300 may receive the available limit of the first power supply unit 1130 from the battery movement detection apparatus 1100 and/or the battery position detection apparatus 1200. The server 1300 may generate a first alert message when the available limit of the first power supply unit 1130 is equal to or greater than the first reference value and is less than a second reference value. The server 1300 may transmit the first alert message to an operator. The first alert message may include available limit information of the first power supply unit 1130. The first alert message may correspond to a message indicating that the battery movement detection apparatus 1100 is in a non-operation risk range. Herein, the non-operation risk range may mean a range in which the battery movement detection apparatus 1100 is likely to stop operating. The first alert message may correspond to a message requesting charge or replacement of the first power supply unit 1130.

FIG. 3 shows a battery position detection apparatus according to an embodiment disclosed herein.

Referring to FIG. 3, the battery position detection apparatus 200 may include a second communication unit 210 and a distance measurement unit 220. The battery position detection apparatus 200 may further include a second power supply unit 230, a second environment sensor 240, a second controller 250, and/or a second storage unit 260.

Hereinbelow, the battery position detection apparatus 200 will be described in detail with reference to FIGS. 1 and 2.

The battery position detection apparatus 200 may have substantially the same configuration as the battery position detection apparatus 1200 of FIG. 2.

The second communication unit 210 may have substantially the same configuration as the second communication unit 1211 of FIG. 2. According to an embodiment, the second communication unit 210 may be controlled in an operation thereof by the second controller 250. For example, the second communication period of the second communication unit 210 may be controlled by the second controller 250.

The distance measurement unit 220 may have substantially the same configuration as the distance measurement unit 1212 of FIG. 2.

The second power supply unit 230 may provide a driving power to the battery position detection apparatus 200. According to an embodiment, the second power supply unit 230 may provide a driving power to the second communication unit 210, the distance measurement unit 220, the second environment sensor 240, the second controller 250, and/or the second storage unit 260. According to an embodiment, the capacity of the second power supply unit 230 may be limited. The second power supply unit 230 may be a power storage unit that is not connected to a power source at all times and has a predetermined capacity.

The second environment sensor 240 may measure surrounding environment information of the battery position detection apparatus 200. The environment information measured by the second environment sensor 240 may include temperature information and/or humidity information. According to an embodiment, the second environment sensor 240 may measure the surrounding environment information of the second power supply unit 230. That is, the second environment sensor 240 may measure a temperature and/or humidity around the second power supply unit 230.

The second controller 250 may control an operation of the second communication unit 210. The second controller 250 may be communicatively connected to the second communication unit 210. The second controller 250 may receive the environment information from the second environment sensor 240.

The second controller 250 may control an operation of the second communication unit 210 considering the environment information received from the second environment sensor 240. The second controller 250 may calculate an available limit of the second power supply unit 230 based on the environment information and control an operation of the second communication unit 210 based on the calculated available limit. According to an embodiment, the second controller 250 may adjust the second communication period of the second communication unit 210 based on the available limit.

More specifically, the second controller 250 may calculate the diagnosis coefficient for the second power supply unit 230 based on the environment information received from the second environment sensor 240. The second controller 250 may calculate the available limit of the second power supply unit 230 based on the diagnosis coefficient. Herein, the diagnosis coefficient of the second power supply unit 230 may be calculated based on the surrounding environment information of the second power supply unit 230, and may correspond to a factor related to performance degradation of the second power supply unit 230 due to surrounding environment information.

A method for the second controller 250 to calculate the diagnosis coefficient of the second power supply unit 230 may be substantially the same as a method for the controller 150 to calculate the diagnosis coefficient of the power supply unit 130 in FIG. 1.

The second controller 250 may calculate the available limit of the second power supply unit 230 based on the diagnosis coefficient of the second power supply unit 230, the capacity of the second power supply unit 230, a consumed current required for the second communication unit 210 to transmit the speed information and/or the distance information to another electronic device, and the communication time of the second communication unit 210.

A method for the second controller 250 to calculate the available limit of the second power supply unit 230 may be substantially the same as a method for the controller 150 to calculate the available limit of the power supply unit 130 in FIG. 1.

When the second controller 250 calculates the available limit of the second power supply unit 230, Equation 1 of FIG. 1 may be referred to. In this case, in Equation 1, D may correspond to the available limit of the second power supply unit 230, C may correspond to the maximum capacity of the second power supply unit 230, I may correspond to a consumed current required for the second communication unit 210 to transmit the speed information and/or the distance information to another electronic device, K may correspond to the diagnosis coefficient of the second power supply unit 230, and T may correspond to the communication time of the second communication unit 210.

The second controller 250 may calculate an available limit of the second power supply unit 230 and control an operation of the second communication unit 210 based on the calculated available limit. The second controller 250 may determine whether the power supply unit 230 is drivable to control an operation of the second communication unit 210. More specifically, the second controller 250 may compare the calculated available limit with a third reference value and control an operation of the second communication unit 210 based on a comparison result. Herein, the third reference value may be set to the same value as the first reference value of FIG. 2, without being limited thereto.

According to an embodiment, the second controller 250 may determine that the second power supply unit 230 is drivable when the available limit of the second power supply unit 230 is equal to or greater than the third reference value. In this case, the second controller 250 may maintain the second communication period of the second communication unit 210.

According to another embodiment, the second controller 250 may increase the second communication period of the second communication unit 210 when the available limit of the second power supply unit 230 is less than the third reference value. When the available limit of the second power supply unit 230 is less than the reference value, this may correspond to a case where the second power supply unit 230 may not normally provide a driving power.

According to an embodiment, the second controller 250 may calculate the available limit of the second power supply unit 230 before the second communication unit 210 operates in the wakeup mode.

The second controller 250 may control an operation of the second communication unit 210 that may transmit the available limit of the second power source unit 230 to the other electronic device. According to an embodiment, the second communication unit 210 may transmit the available limit of the second power source unit 230 to the other electronic device only when the available limit of the second power source unit 230 is equal to or greater than the third reference value. According to a specific embodiment, the second communication unit 210 may transmit the available limit of the second power supply unit 230 to the server 1300.

The server 1300 may generate a second alert message when the available limit of the second power supply unit 230 is equal to or greater than the third reference value and is less than a fourth reference value. The server 1300 may transmit the second alert message to an operator. Herein, the fourth reference value may be set to the same value as the second reference value of FIG. 2, without being limited thereto. The second alert message may include available limit information of the second power supply unit 230. The second alert message may correspond to a message indicating that the battery position detection apparatus 200 is in a non-operation risk range. Herein, the non-operation risk range may mean a range in which the battery position detection apparatus 200 is likely to stop operating. The second alert message may correspond to a message requesting charge or replacement of the second power supply unit 230.

The second controller 250 may selectively include a processor, an ASIC, other chipsets, a logic circuit, a register, a communication modem, a data processing device, etc., known in this field to execute various control logics performed herein. Thus, when the control logic is implemented as software, the second controller 250 may be implemented as a group of program modules. In this case, the program module may be stored in a memory and may be executed by the second controller 250. The memory may be inside or outside the second controller 250 and may be connected to the second controller 250 by well-known various means.

The second storage unit 260 may store data or a program required for each component of the battery position detection apparatus 200 to perform an operation and a function of each component or data, etc., generated in a process of performing the operation and the function. The second storage unit 260 may not be specially limited to a specific type as long as it is a well-known information storage means known to record, erase, update, and read data. According to an embodiment, the information storage means may include RAM, flash memory, ROM, EEPROM, register, etc. In addition, the second storage unit 260 may store program codes where processes executable by the second controller 250 are defined.

FIG. 4 is a flowchart illustrating an operating method of a battery monitoring system according to an embodiment disclosed herein.

Referring to FIG. 4, an operating method of a battery monitoring system may include operation S100 of obtaining speed information and/or distance information, operation S110 of obtaining surrounding environment information, operation S120 of determining whether an apparatus id drivable, and operation S130 of controlling a communication unit.

The operating method of the battery monitoring system will be described in detail with reference to FIGS. 1 to 3. According to an embodiment, each operation of the operating method of the battery monitoring system 1000 may be performed by the battery movement detection apparatus 1100 and/or the battery position detection apparatus 200.

Hereinbelow, a matter redundant to the foregoing matter described for convenience of a description will be omitted or briefly described.

In operation S100, the battery movement detection apparatus 1100 may obtain speed information. In this case, the speed information, which is the speed information of the battery movement detection apparatus 1100, may include acceleration information and/or angular speed information. An operation of obtaining the speed information may be performed by the speed sensor 1110.

In operation S100, the battery position detection apparatus 200 may obtain the distance information. In this case, the distance information may be distance information between the battery movement detection apparatus 1100 and the battery position detection apparatus 200. An operation of obtaining the distance information may be performed by the distance measurement unit 220.

In operation S110, the first environment sensor 1140 may obtain the surrounding environment information of the first power supply unit 1130. According to an embodiment, the first environment sensor 1140 may measure a temperature and/or humidity around the first power supply unit 1130.

In operation S110, the second environment sensor 240 may obtain the surrounding environment information of the second power supply unit 230. According to an embodiment, the second environment sensor 240 may measure a temperature and/or humidity around the second power supply unit 230.

In operation S120, the first controller 1150 may determine whether the battery movement detection apparatus 1000 is drivable. The first controller 1150 may determine whether the battery movement detection apparatus 1000 is drivable, based on the diagnosis coefficient of the first power supply unit 1130, the capacity of the first power supply unit 1130, a consumed current required for the first communication unit 1120 to transmit the speed information to another electronic device, and a communication time of the first communication unit 1120.

In operation S120, the second controller 250 may determine whether the battery position detection apparatus 200 is drivable. The second controller 250 may determine whether the battery movement detection apparatus 200 is drivable, based on the diagnosis coefficient of the second power supply unit 230, the capacity of the second power supply unit 230, a consumed current required for the second communication unit 210 to transmit the distance information and/or the speed information to the other electronic device, and a communication time of the second communication unit 210.

In operation S130, the first controller 1150 may control an operation of the first communication unit 1120 and the second controller 250 may control an operation of the second communication unit 210. According to an embodiment, the first controller 1150 may adjust the first communication period of the first communication unit 1120 and the second controller 250 may adjust the second communication period of the second communication unit 210.

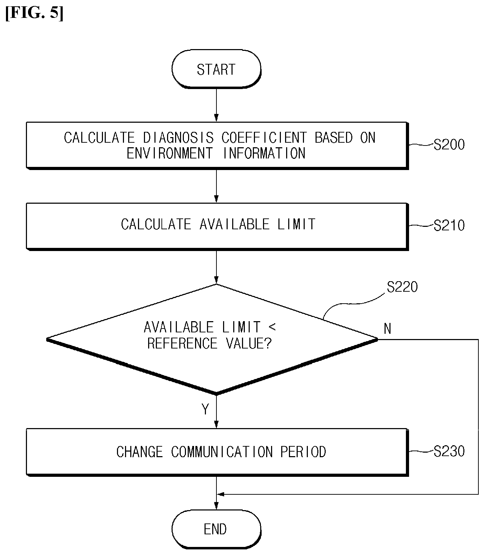

A detailed description of operations S120 and S130 will be described in detail with reference to FIG. 5.

FIG. 5 is a flowchart illustrating in detail an operating method of a battery monitoring system according to an embodiment disclosed herein.

Referring to FIG. 5, an operating method of a battery monitoring system may include operation S200 of calculating a diagnosis coefficient based on environment information, operation S210 of calculating an available limit, operation S220 of determining whether the available limit is less than a reference value, and operation S230 of changing a communication period when the available limit is less than the reference value.

Hereinbelow, the detailed operating method of the battery monitoring system will be described in detail with reference to FIGS. 1 to 4. Operations S200 to S220 may correspond to a detailed embodiment of operation S120 of FIG. 4, and operation S230 may correspond to a detailed embodiment of operation S130.

In operation S200, the first controller 1150 may calculate a diagnosis coefficient of the first power supply unit 1130 based on environment information obtained by the first environment sensor 1140 (e.g., temperature information and/or humidity information around the first power supply unit 1130).

In operation S200, the second controller 250 may calculate a diagnosis coefficient of the second power supply unit 230 based on environment information obtained by the second environment sensor 240 (e.g., temperature information and/or humidity information around the second power supply unit 230).

In operation S210, the first controller 1150 may measure a consumed current and a communication time required for the first communication unit 1120 to transmit the speed information to the other electronic device. In operation S210, the first controller 1150 may calculate the available limit of the first power supply unit 1130 based on the diagnosis coefficient of the first power supply unit 1130, the capacity of the first power supply unit 1130, a consumed current required for the first communication unit 1120 to transmit the speed information to the other electronic device, and the communication time of the first communication unit 1120.

In operation S210, the second controller 250 may measure a consumed current and a communication time required for the second communication unit 210 to transmit the speed information and/or the distance information to the other electronic device. In operation S210, the second controller 250 may calculate the available limit of the second power supply unit 230 based on the diagnosis coefficient of the second power supply unit 230, the capacity of the second power supply unit 230, a consumed current required for the second communication unit 210 to transmit the speed information and/or the distance information to another electronic device, and the communication time of the second communication unit 210.

In operation S220, the first controller 1150 may determine whether the available limit of the first power source unit 1130 is less than a preset reference value. According to an embodiment, the first controller 1150 may determine that the battery movement detection apparatus 1000 is drivable when the available limit of the first power supply unit 130 is equal to or greater than the reference value. In this case, the first power supply unit 1130 may maintain the first communication period of the first communication unit 1120. According to another embodiment, the first controller 1150 may determine that the battery movement detection apparatus 1000 is not drivable when the available limit of the first power supply unit 1130 is less than the reference value.

In operation S220, the second controller 250 may determine whether the available limit of the second power source unit 230 is less than the preset reference value. According to an embodiment, the second controller 250 may determine that the battery position detection apparatus 200 is drivable when the available limit of the second power supply unit 230 is equal to or greater than the reference value. In this case, the second power supply unit 230 may maintain the second communication period of the second communication unit 210. According to another embodiment, the second controller 250 may determine that the battery position detection apparatus 200 is not drivable when the available limit of the second power supply unit 230 is less than the reference value.

In operation S220, the first controller 1150 and the second controller 250 may set the same reference value to respectively determine whether the battery movement detection apparatus 1000 and the battery position detection apparatus 200 are drivable, without being limited thereto. For example, the first controller 1150 may determine based on the first reference value whether the battery movement detection apparatus 1000 is drivable, and the second controller 250 may determine based on the third reference value whether the battery position detection apparatus 200 is drivable.

In operation S230, the first controller 1150 may change the first communication period of the first communication unit 1120 when determining that the battery movement detection apparatus 1000 is not drivable, and may change the second communication period of the second communication unit 210 when determining that the battery position detection apparatus 200 is an embodiment not drivable. According to an embodiment, in operation S230, the first controller 1150 may increase the first communication period of the first communication unit 1120. According to an embodiment, in operation S230, the second controller 250 may increase the second communication period of the second communication unit 210.

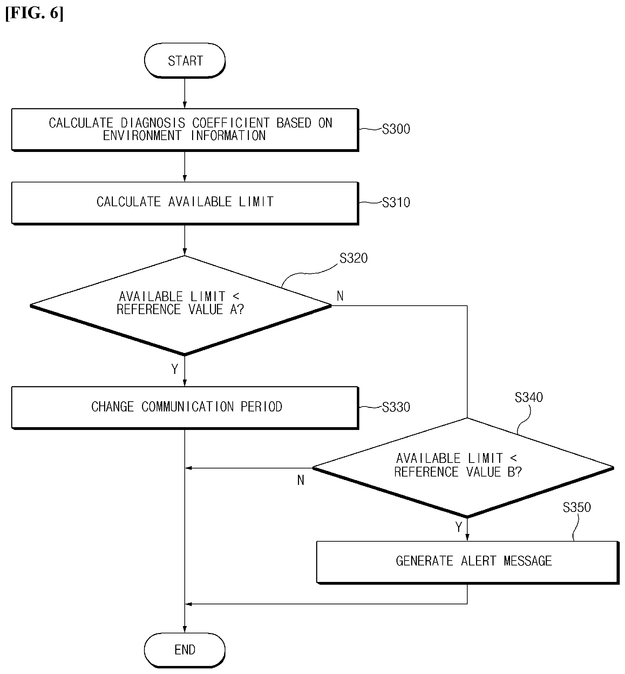

FIG. 6 is a flowchart illustrating in detail an operating method of a battery monitoring system according to an embodiment disclosed herein.

Referring to FIG. 6, an operating method of a battery monitoring system may include operation S300 of calculating a diagnosis coefficient based on environment information, operation S310 of calculating an available limit, operation S320 of determining whether the available limit is less than a first reference value, operation S330 of changing a communication period when the available limit is less than the first reference value, operation S340 of determining whether the available limit is less than the second reference value when the available limit is equal to or greater than the first reference value, and operation S350 of generating an alert message when the available limit is equal to or greater than the first reference value and is less than the second reference value.

Hereinbelow, the detailed operating method of the battery monitoring system will be described in detail with reference to FIGS. 1 to 5.

Operations S300 and S310 may be substantially the same as operations S200 and S210 of FIG. 5, respectively.

Operations S320 and S330 may be substantially the same as operations S220 and S230 of FIG. 5, respectively.

In operation S320, the first controller 1150 and the second controller 250 may compare the available limit of the first power supply unit 1130 and the available limit of the second power supply unit 230 with the first reference value and the third reference value, respectively. That is, in operation S320, a reference value a may mean the first reference value or the third reference value. According to an embodiment, the first reference value and the third reference value may be set to the same value, without being limited thereto.

The first controller 1150 may determine whether the available limit of the first power supply unit 1130 is less than the first reference value in operation S320, and change the first communication period of the first communication unit 1120 in operation S330 when the available limit of the first power supply unit 1130 is less than the first reference value.

The second controller 250 may determine whether the available limit of the second power supply unit 230 is less than the second reference value in operation S320, and change the communication period of the second communication unit 210 in operation S330 when the available limit of the second power supply unit 230 is less than the second reference value.

Operations S340 and S350 may be performed by the server 1300.

When the available limit of the first power supply unit 1130 is equal to or greater than the first reference value and/or the available limit of the second power supply unit 230 is equal to or greater than the third reference value, the server 1300 may perform operation S340.

In operation S340, the server 1300 may compare the available limit of the first power supply unit 1130 and the available limit of the second power supply unit 230 with the second reference value and the fourth reference value, respectively. That is, in operation S340, a reference value b may mean the second reference value or the fourth reference value. According to an embodiment, the second reference value and the fourth reference value may be set to the same value, without being limited thereto.

In operation S350, the server 1300 may generate the first alert message when determining in operation S340 that the available limit of the first power supply unit 1130 is equal to or greater than the first reference value and is less than the second reference value. In operation S350, the server 1300 may generate a second alert message when determining in operation S340 that the available limit of the second power supply unit 230 is equal to or greater than the third reference value and is less than the fourth reference value.

The first alert message generated in operation S350 may include available limit information of the first power supply unit 1130, and the second alert message may include available limit information of the second power supply unit 230.

Terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

The above description is merely illustrative of the technical idea of the present disclosure, and various modifications and variations will be possible without departing from the essential characteristics of embodiments of the present disclosure by those of ordinary skill in the art to which the embodiments disclosed herein pertains. Therefore, the embodiments disclosed herein are intended for description rather than limitation.

**Claims**

1. A battery movement detection apparatus (100, 1100) comprising:

   a speed sensor (110, 1110) configured to obtain speed information of a tray (10) accommodating a battery (20);
   a power supply unit (130, 1130) configured to provide a driving power;
   an environment sensor (140, 1140) configured to obtain a surrounding temperature and/or surrounding humidity of the power supply unit (130, 1130);
   a communication unit (120, 1120, 1211) configured to transmit the speed information to a battery position detection apparatus (200, 1200, 1210, 1220, 1230); and
   a controller (150, 1150) configured to calculate a difference between a preset reference temperature of the power supply unit (130, 1130) and the surrounding temperature and/or calculate a difference between a preset reference humidity of the power supply unit (130, 1130) and the surrounding humidity, calculate an available limit of the power supply unit (130, 1130) based on the difference between the preset reference temperature and the surrounding temperature and/or between the preset reference humidity and the surrounding humidity, the available limit being a factor for determining whether the power supply unit (130, 1130) is drivable, and control an operation of the communication unit (120, 1120, 1211) based on the available limit of the power supply unit (130, 1130).

2. The battery movement detection apparatus (100, 1100) of claim 1, wherein the communication unit (120, 1120, 1211) is further configured to transmit the speed information to the battery position detection apparatus (200, 1200, 1210, 1220, 1230) in every preset communication period, and
the controller (150, 1150) is further configured to adjust the communication period based on the available limit of the power supply unit (130, 1130).

3. The battery movement detection apparatus (100, 1100) of claim 2, wherein
calculating the available limit of the power supply unit (130, 1130) is further based on a capacity of the power supply unit (130, 1130), a consumed current required for the communication unit (120, 1120, 1211) to transmit the speed information to a battery position detection apparatus (200, 1200, 1210, 1220, 1230), and a communication time of the communication unit (120, 1120, 1211).

4. The battery movement detection apparatus (100, 1100) of claim 3, wherein the controller (150, 1150) is further configured to increase the communication period when the available limit of the power supply unit (130, 1130) is less than a reference value.

5. A battery monitoring system (1000) comprising a battery movement detection apparatus (100, 1100) of any one of the preceding claims, a battery position detection apparatus (200, 1200, 1210, 1220, 1230), and a server (1300), wherein the battery position detection apparatus (200, 1200, 1210, 1220, 1230) comprises:

a distance measurement unit (220, 1212) configured to obtain distance information with the battery movement detection apparatus (100, 1100); and
a second communication unit (210, 1211) configured to transmit the speed information and the distance information to the server (1300), and
the server (1300) is further configured to calculate an amount of impact applied to the battery movement detection apparatus (100, 1100) based on the speed information and track a position of the battery movement detection apparatus (100, 1100) based on the distance information.

6. The battery monitoring system (1000) of claim 5, wherein the communication unit (120, 1120) of the battery movement detection apparatus (100, 1100) is further configured to transmit the speed information to the battery position detection apparatus (200, 1200, 1210, 1220, 1230) in every first communication period, and
the controller (150, 1150) is further configured to increase the first communication period when the available limit of the power supply unit (130, 1130) is less than a first reference value.

7. The battery monitoring system (1000) of claim 6, wherein the server (1300) is further configured to generate a first alert message when the available limit of the power supply unit (130, 1130) is equal to or greater than the first reference value and is less than a second reference value.

8. The battery monitoring system (1000) of claim 5, wherein the battery position detection apparatus (200, 1200, 1210, 1220, 1230) comprises:

a second power supply unit (230) configured to provide a driving power;
a second environment sensor (240) configured to obtain environment information about a surrounding environment; and
a second controller (250) configured to calculate an available limit of the second power supply unit (230) based on the environment information and control an operation of the second communication unit (210, 1211) based on the available limit of the second power supply unit (230).

9. The battery monitoring system (1000) of claim 8, wherein the second communication unit (210, 1211) is further configured to transmit the speed information and the distance information to the server (1300) in every second communication period, and
the second controller (250) is further configured to adjust the second communication period based on the available limit of the second power supply unit (230).

10. The battery monitoring system (1000) of claim 9, wherein the second controller (250) is further configured to:

calculate a diagnosis coefficient based on the environment information; and
calculate the available limit of the second power supply unit (230) based on the diagnosis coefficient, a capacity of the second power supply unit (230), a consumed current required for the second communication unit (210, 1211) to transmit the speed information and the distance information to the server (1300), and a communication time of the second communication unit (210, 1211).

11. The battery monitoring system (1000) of claim 10, wherein the second controller (250) is further configured to increase the second communication period when the available limit of the second power supply unit (230) is less than a third reference value, wherein the server (1300) is further configured to generate a second alert message when the available limit of the second power supply unit (230) is equal to or greater than the third reference value and is less than a fourth reference value.

12. An operating method of a battery movement detection apparatus (100, 1100), the operating method comprising:

obtaining (S100) speed information of a tray (10) accommodating a battery (20);
obtaining (S110) a surrounding temperature and/or surrounding humidity of a power supply unit (120, 230, 1130);
transmitting (S130) the speed information to another device in every preset communication period;
calculating (S210, S310) a difference between a preset reference temperature of the power supply unit (130, 230, 1130) and the surrounding temperature and/or calculating a difference between a preset reference humidity of the power supply unit (130, 230, 1130) and the surrounding humidity, calculating an available limit of the power supply unit (130, 230, 1130) based on the difference between the preset reference temperature and the surrounding temperature and/or between the preset reference humidity and the surrounding humidity, the available limit being a factor for determining whether the power supply unit (130, 230, 1130) is drivable; and
adjusting (S230, S330) the communication period based on the available limit of the power supply unit (130, 230, 1130).

13. The operating method of claim 12, further comprising:

measuring a consumed current and a communication time required for transmitting the speed information to the other device,
wherein the available limit of the power supply unit (130, 230, 1130) is further calculated (S210, S310) based on the capacity of the power supply unit (130, 230, 1130), the consumed current, and the communication time.

14. The operating method of claim 13, further comprising increasing (S230, S330) the communication period when the available limit of the power supply unit (130, 230, 1130) is less than a reference value.

**Patentansprüche**

1. Batteriebewegungserfassungsvorrichtung (100, 1100), umfassend:

einen Geschwindigkeitssensor (110, 1110), der konfiguriert ist, um Geschwindigkeitsinformationen einer Ablage (10) zu erhalten, die eine Batterie (20) aufnimmt;
eine Leistungsversorgungseinheit (130, 1130), die konfiguriert ist, um eine Antriebsleistung bereitzustellen;
einen Umgebungssensor (140, 1140), der konfiguriert ist, um eine Umgebungstemperatur und/oder Umgebungsfeuchtigkeit der Leistungsversorgungseinheit (130, 1130) zu erhalten;
eine Kommunikationseinheit (120, 1120, 1211), die konfiguriert ist, um die Geschwindigkeitsinformationen an eine Batteriepositionserfassungsvorrichtung (200, 1200, 1210, 1220, 1230) zu übertragen; und
eine Steuerung (150, 1150), die konfiguriert ist, um eine Differenz zwischen einer voreingestellten Referenztemperatur der Leistungsversorgungseinheit (130, 1130) und der Umgebungstemperatur zu berechnen und/oder eine Differenz zwischen einer voreingestellten Referenzfeuchtigkeit der Leistungsversorgungseinheit (130, 1130) und der Umgebungsfeuchtigkeit zu berechnen, ein verfügbares Limit der Leistungsversorgungseinheit (130, 1130) basierend auf der Differenz zwischen der voreingestellten Referenztemperatur und der Umgebungstemperatur und/oder zwischen der voreingestellten Referenzfeuchtigkeit und der Umgebungsfeuchtigkeit zu berechnen, wobei das verfügbare Limit ein Faktor zum Bestimmen ist, ob die Leistungsversorgungseinheit (130, 1130) antreibbar ist, und einen Betrieb der Kommunikationseinheit (120, 1120, 1211) basierend auf dem verfügbaren Limit der Leistungsversorgungseinheit (130, 1130) zu steuern.

2. Batteriebewegungserfassungsvorrichtung (100, 1100) nach Anspruch 1, wobei die Kommunikationseinheit (120, 1120, 1211) ferner konfiguriert ist, um die Geschwindigkeitsinformationen an die Batteriepositionserfassungsvorrichtung (200, 1200, 1210, 1220, 1230) in jeder voreingestellten Kommunikationsperiode zu übertragen, und die Steuerung (150, 1150) ferner konfiguriert ist, um die Kommunikationsperiode basierend auf dem verfügbaren Limit der Leistungsversorgungseinheit (130, 1130) einzustellen.

**3.** Batteriebewegungserfassungsvorrichtung (100, 1100) nach Anspruch 2, wobei das Berechnen des verfügbaren Limits der Leistungsversorgungseinheit (130, 1130) ferner auf einer Kapazität der Leistungsversorgungseinheit (130, 1130), einem verbrauchten Strom, der für die Kommunikationseinheit (120, 1120, 1211) erforderlich ist, um die Geschwindigkeitsinformationen an eine Batteriepositionserfassungsvorrichtung (200, 1200, 1210, 1220, 1230) zu übertragen, und einer Kommunikationszeit der Kommunikationseinheit (120, 1120, 1211) basiert.

**4.** Batteriebewegungserfassungsvorrichtung (100, 1100) nach Anspruch 3, wobei die Steuerung (150, 1150) ferner konfiguriert ist, um die Kommunikationsperiode zu erhöhen, wenn das verfügbare Limit der Leistungsversorgungseinheit (130, 1130) kleiner als ein Referenzwert ist.

**5.** Batterieüberwachungssystem (1000), umfassend eine Batteriebewegungserfassungsvorrichtung (100, 1100) nach einem der vorhergehenden Ansprüche, eine Batteriepositionserfassungsvorrichtung (200, 1200, 1210, 1220, 1230) und einen Server (1300), wobei die Batteriepositionserfassungsvorrichtung (200, 1200, 1210, 1220, 1230) umfasst:

eine Abstandsmesseinheit (220, 1212), die konfiguriert ist, um Abstandsinformationen mit der Batteriebewegungserfassungsvorrichtung (100, 1100) zu erhalten; und
eine zweite Kommunikationseinheit (210, 1211), die konfiguriert ist, um die Geschwindigkeitsinformationen und die Abstandsinformationen an den Server (1300) zu übertragen, und wobei der Server (1300) ferner konfiguriert ist, um einen Betrag eines auf die Batteriebewegungserfassungsvorrichtung (100, 1100) ausgeübten Stoßes basierend auf den Geschwindigkeitsinformationen zu berechnen und eine Position der Batteriebewegungserfassungsvorrichtung (100, 1100) basierend auf den Abstandsinformationen zu verfolgen.

**6.** Batterieüberwachungssystem (1000) nach Anspruch 5, wobei die Kommunikationseinheit (120, 1120) der Batteriebewegungserfassungsvorrichtung (100, 1100) ferner konfiguriert ist, um die Geschwindigkeitsinformationen an die Batteriepositionserfassungsvorrichtung (200, 1200, 1210, 1220, 1230) in jeder ersten Kommunikationsperiode zu übertragen, und die Steuerung (150, 1150) ferner konfiguriert ist, um die erste Kommunikationsperiode zu erhöhen, wenn das verfügbare Limit der Leistungsversorgungseinheit (130, 1130) kleiner als ein erster Referenzwert ist.

**7.** Batterieüberwachungssystem (1000) nach Anspruch 6, wobei der Server (1300) ferner konfiguriert ist, um eine erste Warnmeldung zu erzeugen, wenn das verfügbare Limit der Leistungsversorgungseinheit (130, 1130) gleich oder größer als der erste Referenzwert und kleiner als ein zweiter Referenzwert ist.

**8.** Batterieüberwachungssystem (1000) nach Anspruch 5, wobei die Batteriepositionserfassungsvorrichtung (200, 1200, 1210, 1220, 1230) umfasst:

eine zweite Leistungsversorgungseinheit (230), die konfiguriert ist, um eine Antriebsleistung bereitzustellen;
einen zweiten Umgebungssensor (240), der konfiguriert ist, um Umgebungsinformationen über eine Umgebung zu erhalten; und
eine zweite Steuerung (250), die konfiguriert ist, um ein verfügbares Limit der zweiten Leistungsversorgungseinheit (230) basierend auf den Umgebungsinformationen zu berechnen und einen Betrieb der zweiten Kommunikationseinheit (210, 1211) basierend auf dem verfügbaren Limit der zweiten Leistungsversorgungseinheit (230) zu steuern.

**9.** Batterieüberwachungssystem (1000) nach Anspruch 8, wobei die zweite Kommunikationseinheit (210, 1211) ferner konfiguriert ist, um die Geschwindigkeitsinformationen und die Abstandsinformationen an den Server (1300) in jeder zweiten Kommunikationsperiode zu übertragen, und die zweite Steuerung (250) ferner konfiguriert ist, um die zweite Kommunikationsperiode basierend auf dem verfügbaren Limit der zweiten Leistungsversorgungseinheit (230) einzustellen.

**10.** Batterieüberwachungssystem (1000) nach Anspruch 9, wobei die zweite Steuerung (250) ferner konfiguriert ist, um:

einen Diagnosekoeffizienten basierend auf den Umgebungsinformationen zu berechnen; und
das verfügbare Limit der zweiten Leistungsversorgungseinheit (230) basierend auf dem Diagnosekoeffizienten, einer Kapazität der zweiten Leistungsversorgungseinheit (230), einem verbrauchten Strom, der für die zweite Kommunikationseinheit (210, 1211) erforderlich ist, um die Geschwindigkeitsinformationen und die Abstandsinformationen an den Server (1300) zu übertragen, und einer Kommunikationszeit der zweiten Kommunikationseinheit (210, 1211) zu berechnen.

**11.** Batterieüberwachungssystem (1000) nach Anspruch 10, wobei die zweite Steuerung (250) ferner konfiguriert ist, um die zweite Kommunikationsperiode zu erhöhen, wenn das verfügbare Limit der zweiten Leistungsversorgungseinheit (230) kleiner als ein dritter Referenzwert ist,
wobei der Server (1300) ferner konfiguriert ist, um eine zweite Warnmeldung zu erzeugen, wenn das verfügbare Limit der zweiten Leistungsversorgungseinheit (230) gleich oder größer als der dritte Referenzwert und kleiner als ein vierter Referenzwert ist.

**12.** Betriebsverfahren einer Batteriebewegungserfassungsvorrichtung (100, 1100), wobei das Betriebsverfahren umfasst:

Erhalten (S100) von Geschwindigkeitsinformationen einer Ablage (10), die eine Batterie (20) aufnimmt;
Erhalten (S110) einer Umgebungstemperatur und/oder Umgebungsfeuchtigkeit einer Leistungsversorgungseinheit (120, 230, 1130);
Übertragen (S130) der Geschwindigkeitsinformationen an eine andere Vorrichtung in jeder voreingestellten Kommunikationsperiode;
Berechnen (S210, S310) einer Differenz zwischen einer voreingestellten Referenztemperatur der Leistungsversorgungseinheit (130, 230, 1130) und der Umgebungstemperatur und/oder Berechnen einer Differenz zwischen einer voreingestellten Referenzfeuchtigkeit der Leistungsversorgungseinheit (130, 230, 1130) und der Umgebungsfeuchtigkeit, Berechnen eines verfügbaren Limits der Leistungsversorgungseinheit (130, 230, 1130) basierend auf der Differenz zwischen der voreingestellten Referenztemperatur und der Umgebungstemperatur und/oder zwischen der voreingestellten Referenzfeuchtigkeit und der Umgebungsfeuchtigkeit, wobei das verfügbare Limit ein Faktor zum Bestimmen ist, ob die Leistungsversorgungseinheit (130, 230, 1130) antreibbar ist; und
Einstellen (S230, S330) der Kommunikationsperiode basierend auf dem verfügbaren Limit der Leistungsversorgungseinheit (130, 230, 1130).

**13.** Betriebsverfahren nach Anspruch 12, ferner umfassend:

Messen eines verbrauchten Stroms und einer Kommunikationszeit, die zum Übertragen der Geschwindigkeitsinformationen an die andere Vorrichtung erforderlich ist,
wobei das verfügbare Limit der Leistungsversorgungseinheit (130, 230, 1130) ferner basierend auf der Kapazität der Leistungsversorgungseinheit (130, 230, 1130), dem verbrauchten Strom und der Kommunikationszeit berechnet wird (S210, S310).

**14.** Betriebsverfahren nach Anspruch 13, ferner umfassend das Erhöhen (S230, S330) der Kommunikationsperiode, wenn das verfügbare Limit der Leistungsversorgungseinheit (130, 230, 1130) kleiner als ein Referenzwert ist.

**Revendications**

**1.** Appareil de détection de mouvement de batterie (100, 1100) comprenant :

un capteur de vitesse (110, 1110) configuré pour obtenir une information de vitesse d'un bac (10) recevant une batterie (20) ;
une unité d'alimentation électrique (130, 1130) configurée pour fournir une puissance d'entraînement ;
un capteur d'environnement (140, 1140) configuré pour obtenir une température ambiante et/ou une humidité ambiante de l'unité d'alimentation électrique (130, 1130) ;
une unité de communication (120, 1120, 1211) configurée pour transmettre l'information de vitesse à un appareil de détection de position de batterie (200, 1200, 1210, 1220, 1230) ; et
un dispositif de commande (150, 1150) configuré pour calculer une différence entre une température de référence prédéfinie de l'unité d'alimentation électrique (130, 1130) et la température ambiante et/ou calculer une différence entre une humidité de référence prédéfinie de l'unité d'alimentation électrique (130, 1130) et l'humidité ambiante, calculer une limite disponible de l'unité d'alimentation électrique (130, 1130) sur la base de la différence entre la température de référence prédéfinie et la température ambiante et/ou entre l'humidité de référence prédéfinie et l'humidité ambiante, la limite disponible étant un facteur pour déterminer si l'unité d'alimentation électrique (130, 1130) peut être entraînée, et commander un fonctionnement de l'unité de communication (120, 1120, 1211) sur la base de la limite disponible de l'unité d'alimentation électrique (130, 1130).

**2.** Appareil de détection de mouvement de batterie (100, 1100) selon la revendication 1, dans lequel l'unité de communication (120, 1120, 1211) est configurée en outre pour transmettre l'information de vitesse à l'appareil de détection de position de batterie (200, 1200, 1210, 1220, 1230) dans chaque période de communication prédéfinie, et

le dispositif de commande (150, 1150) est configuré en outre pour ajuster la période de communication sur la base de la limite disponible de l'unité d'alimentation électrique (130, 1130).

3. Appareil de détection de mouvement de batterie (100, 1100) selon la revendication 2, dans lequel le calcul de la limite disponible de l'unité d'alimentation électrique (130, 1130) est en outre sur la base d'une capacité de l'unité d'alimentation électrique (130, 1130), un courant consommé requis par l'unité de communication (120, 1120, 1211) pour transmettre l'information de vitesse à un appareil de détection de position de batterie (200, 1200, 1210, 1220, 1230) et une durée de communication de l'unité de communication (120, 1120, 1211).

4. Appareil de détection de mouvement de batterie (100, 1100) selon la revendication 3, dans lequel le dispositif de commande (150, 1150) est configuré en outre pour augmenter la période de communication quand la limite disponible de l'unité d'alimentation électrique (130, 1130) est inférieure à une valeur de référence.

5. Système de surveillance de batterie (1000) comprenant un appareil de détection de mouvement de batterie (100, 1100) selon l'une quelconque des revendications précédentes, un appareil de détection de position de batterie (200, 1200, 1210, 1220, 1230) et un serveur (1300), dans lequel l'appareil de détection de position de batterie (200, 1200, 1210, 1220, 1230) comprend :

une unité de mesure de distance (220, 1212) configurée pour obtenir une information de distance avec l'appareil de détection de mouvement de batterie (100, 1100) ; et
une deuxième unité de communication (210, 1211) configurée pour transmettre l'information de vitesse et l'information de distance au serveur (1300), et
le serveur (1300) est configuré en outre pour calculer un degré d'impact appliqué à l'appareil de détection de mouvement de batterie (100, 1100) sur la base de l'information de vitesse et suivre une position de l'appareil de détection de mouvement de batterie (100, 1100) sur la base de l'information de distance.

6. Système de surveillance de batterie (1000) selon la revendication 5, dans lequel l'unité de communication (120, 1120) de l'appareil de détection de mouvement de batterie (100, 1100) est configurée en outre pour transmettre l'information de vitesse à l'appareil de détection de position de batterie (200, 1200, 1210, 1220, 1230) dans chaque première période de communication, et

le dispositif de commande (150, 1150) est configuré en outre pour augmenter la première période de communication quand la limite disponible de l'unité d'alimentation électrique (130, 1130) est inférieure à une première valeur de référence.

7. Système de surveillance de batterie (1000) selon la revendication 6, dans lequel le serveur (1300) est configuré en outre pour générer un premier message d'alerte quand la limite disponible de l'unité d'alimentation électrique (130, 1130) est égale ou supérieure à la première valeur de référence et est inférieure à une deuxième valeur de référence.

8. Système de surveillance de batterie (1000) selon la revendication 5, dans lequel l'appareil de détection de position de batterie (200, 1200, 1210, 1220, 1230) comprend :

une deuxième unité d'alimentation électrique (230) configurée pour fournir une puissance d'entraînement ;
un deuxième capteur d'environnement (240) configuré pour obtenir une information ambiante sur un environnement ambiant ; et
un deuxième dispositif de commande (250) configuré pour calculer une limite disponible de la deuxième unité d'alimentation électrique (230) sur la base de l'information ambiante et commander un fonctionnement de la deuxième unité de communication (210, 1211) sur la base de la limite disponible de la deuxième unité d'alimentation électrique (230).

9. Système de surveillance de batterie (1000) selon la revendication 8, dans lequel la deuxième unité de communication (210, 1211) est configurée en outre pour transmettre l'information de vitesse et l'information de distance au serveur (1300) dans chaque deuxième période de communication, et

la deuxième dispositif de commande (250) est configuré en outre pour ajuster la deuxième période de communication sur la base de la limite disponible de la deuxième unité d'alimentation électrique (230).

10. Système de surveillance de batterie (1000) selon la revendication 9, dans lequel le deuxième dispositif de commande (250) est configuré en outre pour :

calculer un coefficient de diagnostic sur la base de l'information ambiante ; et
calculer la limite disponible de la deuxième unité d'alimentation électrique (230) sur la base du coefficient de diagnostic, d'une capacité de la deuxième unité d'alimentation électrique (230), d'un courant consommé requis par la deuxième unité de communication (210, 1211) pour transmettre l'information de vitesse et l'information de distance au serveur (1300), et d'une durée de communication de la deuxième unité de communication (210, 1211).

11. Système de surveillance de batterie (1000) selon la revendication 10, dans lequel la deuxième dispositif de commande (250) est configuré en outre pour augmenter la deuxième période de communication quand la limite disponible de la deuxième unité d'alimentation électrique (230) est inférieure à une troisième valeur de référence,
    dans lequel le serveur (1300) est configuré en outre pour générer un deuxième message d'alerte quand la limite disponible de la deuxième unité d'alimentation électrique (230) est égale ou supérieure à la troisième valeur de référence et est inférieure à une quatrième valeur de référence.

12. Procédé de fonctionnement d'un appareil de détection de mouvement de batterie (100, 1100), le procédé de fonctionnement consistant à :

    obtenir (S100) une information de vitesse d'un bac (10) recevant une batterie (20) ;
    obtenir (S110) une température ambiante et/ou une humidité ambiante d'une unité d'alimentation électrique (120, 230, 1130) ;
    transmettre (S130) l'information de vitesse à un autre dispositif dans chaque période de communication prédéfinie ;
    calculer (S210, S310) une différence entre une température de référence prédéfinie de l'unité d'alimentation électrique (130, 230, 1130) et la température ambiante et/ou calculer une différence entre une humidité de référence prédéfinie de l'unité d'alimentation électrique (130, 230, 1130) et l'humidité ambiante, calculer une limite disponible de l'unité d'alimentation électrique (130, 230, 1130) sur la base de la différence entre la température ambiante prédéfinie et la température ambiante et/ou entre l'humidité de référence prédéfinie et l'humidité ambiante, la limite disponible étant un facteur pour déterminer si l'unité d'alimentation électrique (130, 230, 1130) peut être entraînée ; et
    ajuster (S230, S330) la période de communication sur la base de la limite disponible de l'unité d'alimentation électrique (130, 230, 1130).

13. Procédé de fonctionnement selon la revendication 12, consistant en outre à :

    mesurer un courant consommé et une durée de communication requise pour transmettre l'information de vitesse à l'autre dispositif,
    dans lequel la limite disponible de l'unité d'alimentation électrique (130, 230, 1130) est en outre calculée (S210, S310) sur la base de la capacité de l'unité d'alimentation électrique (130, 230, 1130), du courant consommé et de la durée de communication.

14. Procédé de fonctionnement selon la revendication 13, consistant en outre à augmenter (S230, S330) la période de communication quand la limite disponible de l'unité d'alimentation électrique (130, 230, 1130) est inférieure à une valeur de référence.

[FIG. 1]

BATTERY MOVEMENT DETECTION
APPARATUS(100)

TRAY
(10)

BATTERY
(20)

SPEED SENSOR
(110)

COMMUNICATION
UNIT
(120)

POWER SUPPLY
UNIT
(130)

ENVIRONMENT
SENSOR
(140)

CONTROLLER
(150)

STORAGE
UNIT
(160)

[FIG. 2]

1000

SERVER (1300)

1200

BATTERY POSITION DETECTION APPARATUS #1 (1210)
- SECOND COMMUNICATION UNIT (1211)
- DISTANCE MEASUREMENT UNIT (1212)

BATTERY POSITION DETECTION APPARATUS #2 (1220)

. . .

BATTERY POSITION DETECTION APPARATUS #N (1230)

BATTERY MOVEMENT DETECTION APPARATUS (1100)
- SPEED SENSOR (1110)
- FIRST COMMUNICATION UNIT (1120)
- FIRST POWER SUPPLY UNIT (1130)
- FIRST ENVIRONMENT SENSOR (1140)
- FIRST CONTROLLER (1150)
- FIRST STORAGE UNIT (1160)

[FIG. 3]

BATTERY POSITION DETECTION
APPARATUS (200)

| SECOND COMMUNICATION UNIT (210) | DISTANCE MEASUREMENT UNIT (220) |
| SECOND POWER SUPPLY UNIT (230) | SECOND ENVIRONMENT SENSOR (240) |
| SECOND CONTROLLER (250) | SECOND STORAGE UNIT (260) |

[FIG. 4]

START

OBTAIN SPEED INFORMATION AND/OR DISTANCE INFORMATION —S100

OBTAIN ENVIRONMENT INFORMATION ABOUT A SURROUNDING ENVIRONMENT —S110

DETERMINE WHETHER BATTERY MOVEMENT DETECTION APPARATUS IS DRIVABLE —S120

CONTROL COMMUNICATION UNIT —S130

END

[FIG. 5]

**[FIG. 6]**

```
                    START

    CALCULATE DIAGNOSIS COEFFICIENT BASED ON      S300
           ENVIRONMENT INFORMATION

         CALCULATE AVAILABLE LIMIT               S310

                                        S320
              AVAILABLE LIMIT <              N
            REFERENCE VALUE A?
                       Y
                                                        S340
       CHANGE COMMUNICATION PERIOD    S330
                                               AVAILABLE LIMIT <
                                 N           REFERENCE VALUE B?
                                                       Y            S350
                                             GENERATE ALERT MESSAGE

                    END
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210163806
- US 20170278061 A1
- JP 2019097125 A
- JP 407198807 A